# EUROPÄISCHE PATENTSCHRIFT

(11) **EP 1 957 341 B1**
(45) Veröffentlichungstag und Bekanntmachung des Hinweises auf die Patenterteilung: **02.05.2012**
(21) Anmeldenummer: 06806600.0
(22) Anmeldetag: 28.10.2006
(51) Int. Cl.: B62D 1/19, B62D 1/184

(54) **VERSTELLBARE LENKSÄULE FÜR EIN KRAFTFAHRZEUG**
ADJUSTABLE STEERING COLUMN FOR A MOTOR VEHICLE
COLONNE DE DIRECTION RÉGLABLE CONÇUE POUR UN VEHICULE AUTOMOBILE

(30) Priorität: 24.11.2005 DE 102005056308
(43) Veröffentlichungstag der Anmeldung: 20.08.2008
(73) Patentinhaber: ThyssenKrupp Presta Aktiengesellschaft, 9492 Eschen (LI)
(72) Erfinder: GRAF, Eugen, CH-9470 Werdenberg (CH)
(74) Vertreter: Hofmann, Ralf U.
(86) Internationale Anmeldenummer: PCT/EP2006/010394
(87) Internationale Veröffentlichungsnummer: WO 2007/059846

(56) Entgegenhaltungen:
- EP-A2- 1 361 137
- WO-A-03/018385
- US-A- 5 239 889

## Beschreibung

Die Erfindung betrifft eine verstellbare Lenksäule für ein Kraftfahrzeug mit einer in mindestens eine Stellrichtung verstellbaren Stelleinheit zur Einstellung der Position der Lenksäule, einer in diese Stellrichtung unverstellbaren Halteeinheit, einer Fixiereinrichtung, in deren geöffnetem Zustand die Stelleinheit gegenüber der Halteeinheit zur Einstellung der Position der Lenksäule verstellbar ist und in deren geschlossenem Zustand die Stelleinheit von der Fixiereinrichtung festgestellt ist, und einer Crash-Blockiereinrichtung, die zwischen einem Passivzustand, in welchem die Stelleinheit gegenüber der Halteeinheit im geöffneten Zustand der Fixiereinrichtung zur Einstellung der Position der Lenksäule verstellbar ist, und einem Aktivzustand verstellbar ist, in welchem sie eine zusätzliche Haltekraft gegen eine Verstellung der Stelleinheit gegenüber der Halteeinheit in mindestens eine Verstellrichtung aufbringt.

Verstellbare Lenksäulen dienen zur Erhöhung des Komforts des Fahrers und können in ihrer Längen-, Höhen- und/oder Winkelposition verändert werden, um so die Position des Steuerrades auf die Sitzposition des Fahrers anpassen zu können. Hierzu verfügen diese Lenksäulen über ein Stellteil, dessen Lage in Bezug auf ein Halteteil veränderbar ist und mit einer Fixiereinrichtung oder einem Klemmsystem festlegbar ist. Der Fall, dass das Stellteil gegenüber dem Halteteil festgelegt ist, kann als normaler Betriebszustand bezeichnet werden, da das Fahrzeug nur in diesem Zustand gefahren werden soll.

Für verstellbare Lenksäulen stellt sich das Problem, dass im Crash-Fall ein unkontrolliertes Verstellen der Lenksäule verhindert werden muss, damit beispielsweise genügend Rückhaltekraft zum Öffnen des Airbags zur Verfügung steht und/oder die Energie beim Aufprall des Fahrers auf das Steuerrad kontrolliert abgebaut werden kann. Gleichzeitig soll die Fixiereinrichtung leichtgängig und mit geringen Wegen der Betätigungsglieder geöffnet und geschlossen werden können und nur wenig Bauraum einnehmen.

Zur Fixierung der eingestellten Position werden in der EP 0 802 104 B1 beispielsweise sich kreuzende Pakete von Lamellen vorgeschlagen, wobei das eine an dem die Lenkspindel lagerndem Stellteil, hier eine Manteleinheit, und das andere an einem mit dem Fahrzeugchassis verbundenen Halteteil verbunden ist. Die beiden sich kreuzenden Lamellenpakete werden von einem Spannbolzen durchsetzt und durch Betätigen eines Spannhebels gegenseitig verklemmt. Damit die Lenksäule verstellt werden kann, besitzen die Lamellen in den Verstellrichtungen der Lenksäule ausgerichtete Langlöcher, wobei die Langlöcher in allen Lamellen eines Lamellenpaketes gleich ausgerichtet sind.

Diese Systeme gestatten eine Fixierung der Lenksäule bereits mit wenigen Lamellen und einem kurzen Betätigungsweg und einer relativ geringen Spannkraft. Um allerdings die hohen Haltekräfte, wie sie für den Crash-Fall erforderlich sind aufnehmen zu können, muss die Anzahl der Lamellen und/oder die Klemmkraft erhöht werden. Dadurch wird die Fixiereinrichtung aufwändiger, teurer und nimmt mehr Bauraum in Anspruch. Weiter werden die Wege und Kräfte zur Betätigung des Spannhebels grösser. Ausserdem kann der Energieabbau beim Durchrutschen der Fixiereinrichtung nur ungenau eingestellt werden.

In der EP 0 836 981 wird beispielsweise zur Fixierung der eingestellten Position vorgeschlagen, eine Zahnleiste, die an einer mit dem Fahrzeugchassis verbundenen Trageinheit befestigt ist, mit einer zweiten Zahnleiste, die an der die Lenkspindel aufnehmenden Manteleinheit befestigt ist, in Eingriff zu bringen. Zur Verstellung der Lenksäule werden diese Zahnleisten ausser Eingriff gebracht, so dass ein Verstellen der Lenksäule ermöglicht wird.

Damit derartige Systeme im Crash-Fall nicht durchrutschen, müssen die Verzahnungen entsprechend kräftig ausgelegt sein und eine ausreichende Spannkraft vorgesehen sein, so dass die Verzahnungen nicht ausser Eingriff kommen. Damit werden die Wege und Kräfte zur Betätigung des Spannhebels grösser. Darüberhinaus bedingt eine kräftige Auslegung der Verzahnung, dass die Zahnabstände vergrössert werden müssen, wodurch die Schrittweite, in denen die Lenksäule verstellt werden kann, vergrössert wird. Für den Komfort ist es aber gewünscht, eine möglichst kontinuierliche oder zumindest feinstufige Verstellung zu ermöglichen.

Zudem benötigen beide genannten Prinzipien eine sehr hohe Steifigkeit der karosserieseitigen Trageinheit.

In der DE 196 17 561 C1 wird deshalb zusätzlich zur Fixiereinrichtung eine Crash-Blockiereinrichtung mit einem zusätzlichen Arretierteil vorgeschlagen, das unabhängig von der Fixiereinrichtung wirkt und im Crash-Fall eine zusätzliche Haltekraft aufbringt.

Der Nachteil dieser Lösung besteht jedoch darin, dass ein derartiges zusätzliches Arretierteil vorgesehen werden muss, was zusätzlichen Bauraum und Kosten benötigt. Ferner muss sichergestellt sein, dass ein derartiges zusätzliches Arretierteil im Crash-Fall, aber nur dann, sicher in Eingriff gelangt und für den Fall, das die Lenksäule verstellt werden soll sicher ausser Eingriff gebracht ist.

Aus der EP 1 433 687 A2 ist es bekannt, ein bei einer Verformung der Lenksäule im Crash-Fall wirkendes Verkantteil vorzusehen, welches nach seinem Verkanten eine zusätzliche Haltekraft gegen eine Verstellung der eingestellten Position der Lenksäule aufbringt. Das Wirksamwerden dieses Verkantteils ist allerdings von der Verformung der Lenksäule im Crash-Fall abhängig.

Die aus der DE 195 06 210 C1 bekannte verstellbare Lenksäule umfasst ein Sperrglied mit einer Schwertkante, welches beim Schließen der Feststellvorrichtung an einen Klemmflansch andrückbar ist. Im Crash-Fall gräbt sich die Schwertkante dieses Sperrgliedes in das Material des Klemmflansches ein, um eine möglichst formschlüssige Verriegelung der Manteleinheit der Lenksäule mit der karosseriefesten Halteeinheit zu bewirken.

Die DE 41 33 960 C2 beschreibt eine Sicherheitsvorrichtung für Kraftfahrzeug-Lenksäulen, wobei das dem Fahrer zugewandte Ende der Lenksäule im Falle eines Crashs nach vorne verlagert wird. Hierzu ist ein verschwenkbarer Schneidenhalter vorgesehen, an welchem Druck-oder Zugmittel angreifen, beispielsweise pyrotechnische Vorrichtungen. Im Crash-Fall dringt die Schneide des Schneidenhalters in ein Mantelrohr der Lenkspindel oder die Lenkspindel ein.

Eine verstellbare Lenksäule der eingangs genannten Art geht aus der US 5,239,889 A hervor. Zur Bereitstellung einer zusätzlichen Haltekraft im Crash-Fall dient eine Crash-Blockiereinrichtung. Auf dem Spannbolzen einer zur Feststellung der eingestellten Position der Lenksäule dienenden Fixiereinrichtung ist ein Blockierelement der Crash-Blockiereinrichtung angeordnet, welches im Crash-Fall von einem Kabel 11 um die Achse des Spannbolzens verdrehbar ist. Hierbei werden zwei Haltenasen mit der Unterseite des horizontalen Schenkels einer am Mantelrohr angebrachten Konsole in Eingriff gebracht, wodurch eine zusätzliche Haltekraft gegen die Längsverstellung der Lenksäule aufgebracht wird.

Aus der WO 03/018385 A1 und der EP 1 361 137 A2 gehen ebenfalls Lenksäulen hervor, bei denen zur Bereitstellung einer Haltekraft für den Crash-Fall Eingriffselemente einseitig an Plattenteile angedrückt werden, welche mit diesen zerspanend zusammenwirken.

Die Aufgabe der Erfindung besteht darin, bei einer verstellbaren Lenksäule für ein Kraftfahrzeug im Crash-Fall eine ausreichend große Haltekraft bereitzustellen, damit beispielsweise die Funktion des Airbags gewährleistet ist oder beispielsweise die Energie beim Aufprall des Fahrers auf das Steuerrad kontrolliert absorbiert werden kann, wobei gleichzeitig zumindest einige Nachteile des Standes der Technik beseitigt sind. Insbesondere soll die Fixiereinrichtung mit möglichst geringen Betätigungskräften und Betätigungswegen zwischen dem geöffneten und geschlossenen Zustand wechselseitig betätigt werden können.

Erfindungsgemäß wird die Aufgabe durch eine verstellbare Lenksäule mit den Merkmalen des Anspruchs 1 bzw. des Anspruchs 2 gelöst.

Dabei umfasst die Crash-Blockiereinrichtung mindestens ein Blockierelement mit zumindest zwei Blockiernasen, zwischen denen in einer ersten Ausführungsform der Erfindung ein einzelnes Plattenteil liegt und die im Aktivzustand der Crash-Blockiereinrichtung an gegenüberliegenden Seiten dieses Plattenteils an diesem Plattenteil anliegen, wobei entweder das Blockierelement in der Stellrichtung, in der es wirksam ist, unverschiebbar mit der Halteeinheit verbunden ist und das Plattenteil in diese Stellrichtung unverschiebbar mit der Stelleinheit verbunden ist oder das Blockierelement in der

Stellrichtung, in der es wirksam ist, unverschiebbar mit der Stelleinheit verbunden ist und das Plattenteil in dieser Stellrichtung unverschiebbar mit der Halteeinheit verbunden ist.

In einer weiteren Ausführungsform der Erfindung liegen zwischen den Blockiernasen des Blo-ckierelements zwei Plattenteile, vor, denen eines in der (Stellrichtung, in der das Blockierelement wirksam ist, unverschiebbar mit der Halteeinheit und das andere in dieser Stellrichtung unverschiebbar mit der Stelleinheit verbunden ist.

Ein Vorteil der erfindungsgemäßen Ausbildung ist es u.a., dass die Lenksäule eine relativ einfache Ausbildung aufweisen kann bei einer hohen, zuverlässig wirkenden Haltekraft im Crash-Fall.

Im Weiteren wird die Erfindung anhand von schematischen Figuren erläutert.

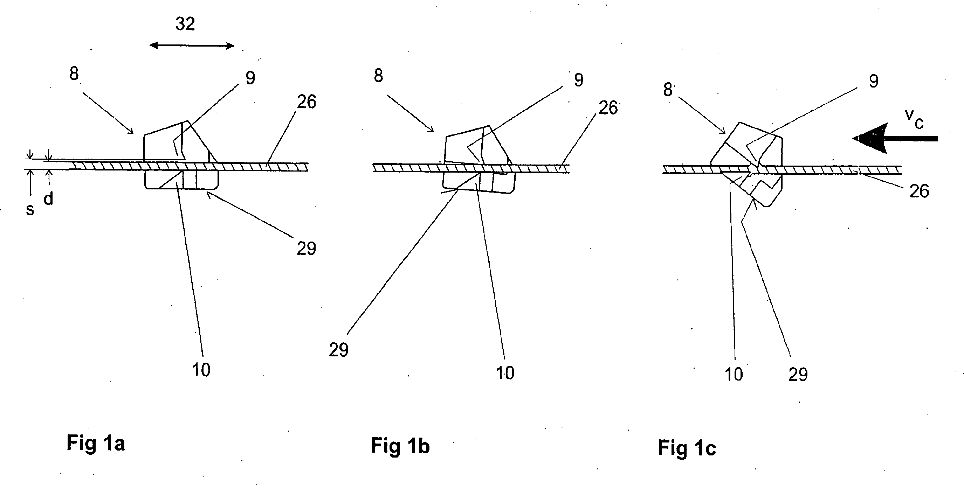

Figur 1 zeigt eine Prinzipdarstellung der Wirkungsweise für eine Ausführungsform der Erfindung, wobei die
Figur 1a die Darstellung im geöffneten Zustand der Fixiereinrichtung, die
Figur 1 b im geschlossenen Zustand der Fixiereinrichtung und
Figur 1 c im Crash-Fall zeigen.
Figur 2 zeigt einen vergrösserten Ausschnitt aus der Ansicht entsprechend der Figur 1 b.
Figur 3 zeigt einen vergrösserten Ausschnitt aus der Ansicht entsprechend der Figur 1 c.
Figur 4 zeigt eine Ansicht im Crash-Fall für eine andere Ausführungsform des Blockierelementes.
Figur 5 zeigt eine schematische isometrische Ansicht einer Ausführungsform einer erfindungsgemässen Lenksäule, wobei die Komponenten der Fixiereinrichtung auseinander gezogen dargestellt sind.

Die Figuren 6 und 7 zeigen zwei Ansichten der Lenksäule entsprechend der Figur 5, die Figuren 8a, 8b und 8c schematische Teilschnitte der Lenksäule von Figur 5 im Bereich der Crash-Blockiereinrichtung im geöffneten Zustand der Fixiereinrichtung, im geschlossenen Zustand der Fixiereinrichtung und im Crash-Fall.

Die Figuren 9a, 9b, 10a und 10b zeigen das Blockierelement in zwei Ausführungsformen in isometrischen Ansichten.

In Figur 11a und 11b sind schematisch im Schnitt (Schnittlinie A-A in Figur 2) zwei verschiedene Ausführungsformen des Blockierelements dargestellt.

In Figur 12 ist der Eingriff des Blockierelementes in das Plattenteil schematisch dargestellt (in einer Ansicht des Blockierelements entsprechend der Blickrichtung D von Figur 8a). Figur 13 veranschaulicht eine andere Ausführungsform des Blockierelements im Eingriff mit dem Plattenteil (Ansicht analog Figur 12).

Figuren 14, 15 und 16, 17 veranschaulichen in zwei Ausführungsbeispielen im Schnitt durch das Blockierelement die Lage des Blockierelements in Bezug auf den Spannbolzen.

Figuren 18 und 19 zeigen schematische Prinzipdarstellungen einer weiteren Ausführungsvariante der Erfindung im Passiv- und Aktivzustand der Crash-Blockiereinrichtung (in Form von Schnittdarstellungen analog den Figuren 1 bzw. 4);

Fig. 20 eine Schrägsicht des Blockierelements und der Plattenteile gemäß dieser Ausführungsvariante der Erfindung.

Anhand der Figuren 1 bis 4 wird zunächst das Funktionsprinzip der Crash-Blockiereinrichtung erläutert. Die Crash-Blockiereinrichtung, umfasst ein Blockierelement 8 mit zumindest zwei Blockiernasen 9, 10, zwischen die ein Plattenteil 26 ragt, d.h. die Blockiernasen 9, 10 sind beidseitig des Plattenteils 26 angeordnet. Das Blockierelement 8 mit seinen Blockiernasen 9, 10 umgreift hierbei mindestens einen Längsrand des Plattenteils 26 oder mindestens einen Längsrand einer Ausnehmung im Plattenteil 26. Das Plattenteil 26 ist insgesamt eben bzw. flach ausgebildet.

Die Dicke d des umgriffenen Plattenteils 26, das im bevorzugten Fall aus ebenem Blech ausgebildet ist, ist dabei so klein, dass die Blockiernasen 9, 10 bei entsprechender Ausrichtung des Blockierelementes 8 etwas Spiel zum Plattenteil 26 aufweisen. Durch dieses Spiel in der in Figur 1a dargestellten Stellung des Blockierelements 8, die dem Passivzustand der Crash-Blockiereinrichtung entspricht, wird eine Verschiebung zwischen dem Blockierelement 8 und dem Plattenteil 26 in beide Richtungen einer in Figur 1a durch einen Doppelpfeil angedeuteten Stellrichtung 32 ermöglicht. Entsprechend ist die Öffnungsweite s zwischen den beiden Blockiernasen 9, 10 beziehungsweise im hier gezeigten Beispiel ihr Abstand etwas grösser als die Dicke d des Plattenteils.

Durch eine kleine gezielte Verdrehung des Blockierelementes sind jedoch beide Enden der Blockiernasen 9, 10 zur Anlage am Plattenteil 26 gebracht. Diese Stellung des Blockierelements 8, die dem Aktivzustand der Crash-Blockiereinrichtung entspricht, ist in Figur 1b dargestellt. Im Falle einer, insbesondere durch einen Crash hervorgerufenen, beginnenden Verschiebung v_{c} des Plattenteils 26 gegenüber dem Blockierelement 8 parallel zur Stellrichtung 32 wird das Plattenteil 26, bedingt durch die reibschlüssige Anlage an den Blockiernasen 9, 10, zwischen den beiden spitzen- bzw. schneidenförmigen Enden der Blockiernasen 9, 10 fester eingeklemmt. Dabei graben sich die Spitzen bzw. Schneiden der Blockiernasen 9, 10 in das Plattenteil ein, wie in den Figuren 1c, 3 und 4 dargestellt, und bewirken so eine Haltekraft gegen eine Verschiebung des Plattenteils 26 gegenüber dem Blockierelement 8.

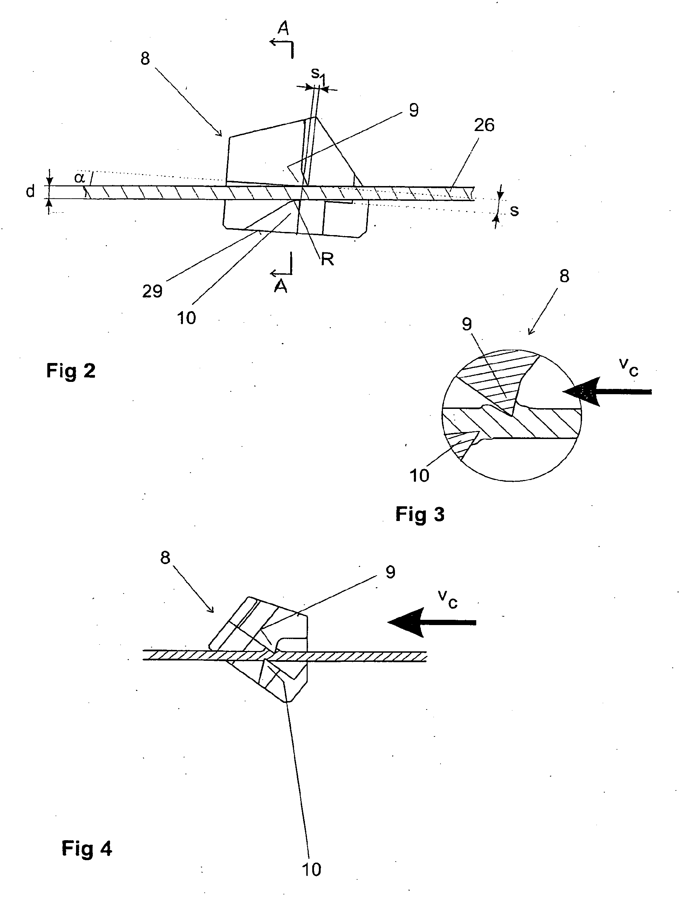

Alternativ zum Eingraben der Spitzen bzw. Schneiden können diese auch durch starke Reibung oder durch ein Schaben die gewünschte Haltekraft bewirken. In diesem hier nicht dargestellten Fall haben die Blockiernasen eine andere für den Fachmann naheliegende Form und Ausrichtung. Beispielsweise wird der Radius R an der Spitze bzw. Schneide in der Blockiernase 10 vergrössert und die Blockiernase 9 In Richtung der Verschiebung v_{c} und nicht, wie in Figur 2 angedeutet entgegen der Richtung der Verschiebung v_{c} des Plattenteils 26 im Crash-Fall ausgerichtet. Wird die zusätzliche Haltekraft durch Reibung oder Schaben bewirkt, ist eine kontrollierte Energieaufzehrung einstellbar.

Als weiteres Mittel zur Einstellung der zusätzlichen Haltekraft dient der Versatz S1 in Richtung des Verschiebeweges v_{c} zwischen den beiden Blockiernasen 9 und 10. Mit Hilfe des Versatzes S1, den Radien der Spitzen der Blockiernasen R und der Öffnungsweite s zwischen den beiden Blockiernasen sowie der Dicke 2 des Plattenteils 26 wird der Winkel α im Aktivzustand bestimmt.

Über die Reibkraft, die im Falle Crashs zwischen Blockiernasen und Plattenteil aufgebracht wird, entsteht ein entsprechendes Drehmoment, das eine Vergrößerung des Winkels α bewirkt und damit die zusätzliche Haltekraft bestimmt. Der Winkel α kann durch entsprechende Anschläge auf einen maximalen Wert begrenzt werden.

Das Blockierelement 8 ist in diesen Ausführungsformen somit um eine gedachte Achse gegenüber dem Plattenteil 26 verdrehbar, die parallel zur Ebene des Plattenteils 26 und rechtwinklig zur Stellrichtung 32 liegt. Im Aktivzustand der Crash-Blockiereinrichtung ist das Blockierelement 8 um diese Achse gegenüber dem Passivzustand der Crash-Blockiereinrichtung verdreht, wobei im Aktivzustand der Crash-Blockiereinrichtung die Blockiernasen 9, 10 an den beiden Oberflächen des Plattenteils 26 anliegen. Im Passivzustand der Crash-Blockiereinrichtung sind zumindest die eine oder mehreren mit einer der beiden Oberflächen des Plattenteils 26 zusammenwirkenden Blockiernasen 9 von dieser Oberfläche des Plattenteils 26 abgehoben. Die Achse, um die das Blockierelement 8 verdrehbar ist, kann beispielsweise durch die Spitze bzw. Schneide der Blockiernase 10 verlaufen.

Es handelt sich bei den Oberflächen des Plattenteils 26, mit denen die Blockiernasen 9, 10 zusammenwirken, um die Haupt- bzw. Großflächen des Plattenteils 26 und nicht etwa um die stirnseitigen Schmalflächen.

Die Blockiernase 9 weist einen zum Plattenteil 26 hin gerichteten Flächenabschnitt auf, der im Aktivzustand der Crash-Blockiereinrichtung mit der Oberfläche des Plattenteils 26 einen Winkel α bildet, der, zumindest sofern nicht der Crash-Fall eingetreten ist, größer als 0° und kleiner als 10° ist, wobei ein Ende dieses Flächenabschnitts der Blockiernase 9 mit der Oberfläche des Plattenteils 26 in Kontakt steht. Dieser Flächenabschnitt bildet im Passivzustand der Crash-Blockiereinrichtung mit der Oberfläche des Plattenteils 26 einen Winkel α von annähernd 0° und ist von der Oberfläche des Plattenteils 26 abgehoben.

Bei einer beginnenden Verschiebung v_{c} des Plattenteils 26 relativ zum Blockierelement 8 in diejenige Richtung parallel zur Stellrichtung 32, in die das Blockierelement 8 wirksam ist, kommt es zu einem auf das Blockierelement 8 wirkenden Drehmoment, durch welches mindestens eine der Blockiernasen 9, 10 stärker an das Plattenteil 26 angedrückt wird. Vorzugsweise sind hierbei die Blockiernasen 9, 10, die auf den beiden Seiten des Plattenteils 26 an diesem anliegen, bezüglich der Stellrichtung 32 gegeneinander versetzt angeordnet. Diese Blockiernasen 9, 10 weisen also unterschiedliche Abstände von der Drehachse des Blockierelements 8 auf. Es ist aber auch möglich, ein solches Drehmoment bei gleichen Abständen der Blockiernasen 9, 10 von der Drehachse des Blockierelements 8 hervorzurufen.

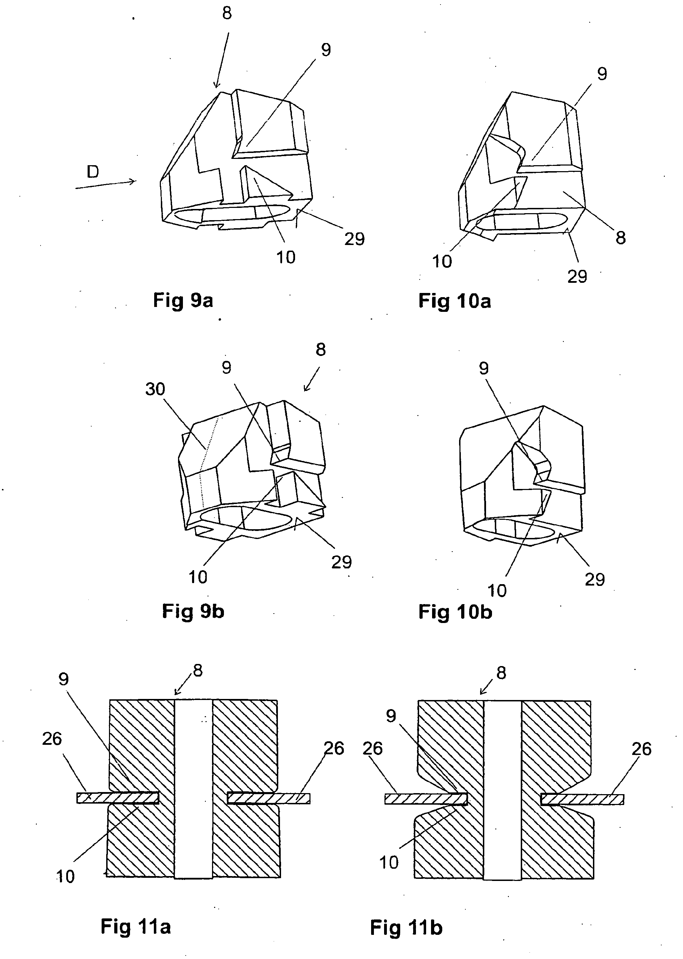

In den Figuren 9a, 9b sowie 10a, 10b sind zwei verschiedene Ausführungsformen für das Blockierelement 8 in jeweils zwei verschiedenen isometrischen Ansichten dargestellt. Es handelt sich in beiden Fällen um eine Ausbildung, bei der das Blockierelement 8 im montierten Zustand eine Ausnehmung im Plattenteil 26 durchsetzt, die in Form eines parallel zur Stellrichtung 23 verlaufenden Langlochs ausgebildet ist, wobei es auf zwei gegenüberliegenden Seiten jeweils mindestens zwei Blockiernasen 9, 10 aufweist, mit denen es die beiden Längsränder der Ausnehmung umgreift.

Die Ausführung entsprechend den Figuren 9a und 9b korrespondiert mit der Ausführung in Figur 3, bei der sich im Falle einer Verschiebung v_{c} beide Blockiernasen 9 und 10 in das Plattenteil 26 eingraben.

In der Ausführungsform entsprechend den Figuren 10a und 10b, die mit der Figur 4 korrespondiert, gräbt sich nur eine der beiden Blockiernasen, hier die Blockiernase 9, in das Plattenteil 26 ein. Die zweite Blockiernase 10 wird an die Oberfläche des Plattenteils 26 angepresst und bewirkt ein Schaben bzw. quetscht in Wechselwirkung mit der ersten Blockiernase 9 die Dicke d des Plattenteils 26 partiell zusammen.

Mögliche Radien R der Spitzen bzw. Schneiden der Blockiernasen liegen im Bereich von etwa 0,1mm bis 4mm, wobei die untere Grenze im wesentlichen durch das Fertigungsverfahren, mit dem die Blockiernase hergestellt ist, bestimmt ist. Im bevorzugten Fall ist das Blockierelement 8 einteilig mit den Blockiernasen 9, 10 gesintert und die Blockiernasen 9, 10 sind nicht mittels Zerspanung oder Schleifen nachbearbeitet. Zur Vereinfachung kann das Blockierelement 8 auch zweiteilig durch Sintern hergestellt sein, wobei die Teilstücke, bevorzugt zwei spiegelgleiche Teile, an der Trennebene 30 (vgl. Fig. 9b) ohne Fügeoperation zusammengelegt oder mit einer Fügeoperation verbunden sind. Dabei kann die Verbindung auch einfach durch Sinterbönding, Kleben, Löten, Schweissen oder auf andere Art erfolgen.

Figuren 11a und 11b zeigen Querschnitte durch das Blockierelement 8 und das Plattenteil 26 entlang der Schnittlinie A-A in Figur 2 für unterschiedliche mögliche Ausführungsformen. Die Figuren veranschaulichen, dass die Blockiernasen 9, 10 in Querrichtung zur Stellrichtung 32 bzw. Bewegungsrichtung v_{c} verschiedene Profile besitzen können. Dabei stehen vor allem fertigungstechnische Aspekte im Vordergrund. So kann eine Anschrägung in Querrichtung die Ausrichtung des Plattenteils 26 erleichtern. Gleichfalls sind einfache Fasen oder Radienübergänge möglich und schränken die Funktion des Blockierelementes 8 nicht ein.

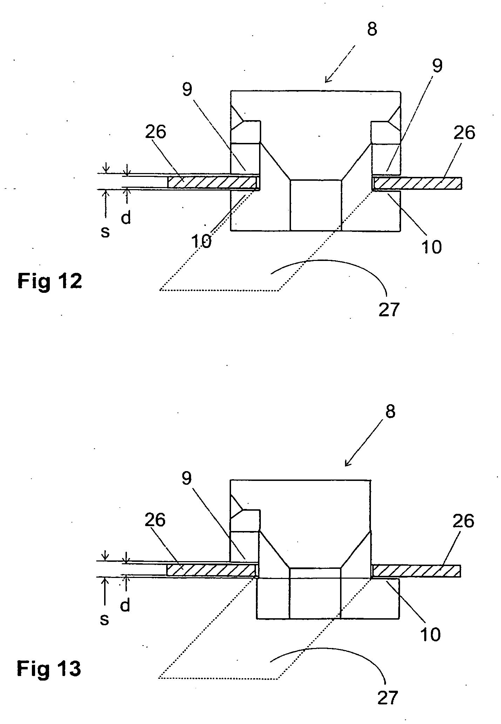

Die Figuren 12 und 13 zeigen zwei verschiedene Ausführungsformen für das Blockierelement 8 in der Ansicht direkt von vorne, Blickrichtung D in Figur 9a. In der in Figur 13 gezeigten Ausführungsform sind die Blockiernasen 9, 10 nicht jeweils an einer Seite des Langlochs 27 im Plattenteil 26 angeordnet, sondern hier befindet sich die Blockiernase 9 an der einen Seite und die Blockiernase 10 an der anderen Seite des Langlochs 27 (das in den Figuren 12 und 13 durch punktierte Linien in isometrischer Darstellung angedeutet ist). Ebenso ist es denkbar und möglich anstelle von vier Blockiernasen, wie sie in der Figur 12 schematisch gezeigt sind, nur zwei Blockiernasen auf einer Seite des Langlochs oder drei Blockiernasen am Blockierelement 8 auszubilden.

Grundsätzlich wäre es auch denkbar und möglich, dass das Blockierelement 8 mit den Blockiernasen 9, 10 mindestens einen Längsrand des Plattenteils 26 (und nicht den Längsrand einer Ausnehmung im Plattenteil 26) umgreift, wobei dieser Längsrand wiederum parallel zur Stellrichtung 32 verläuft.

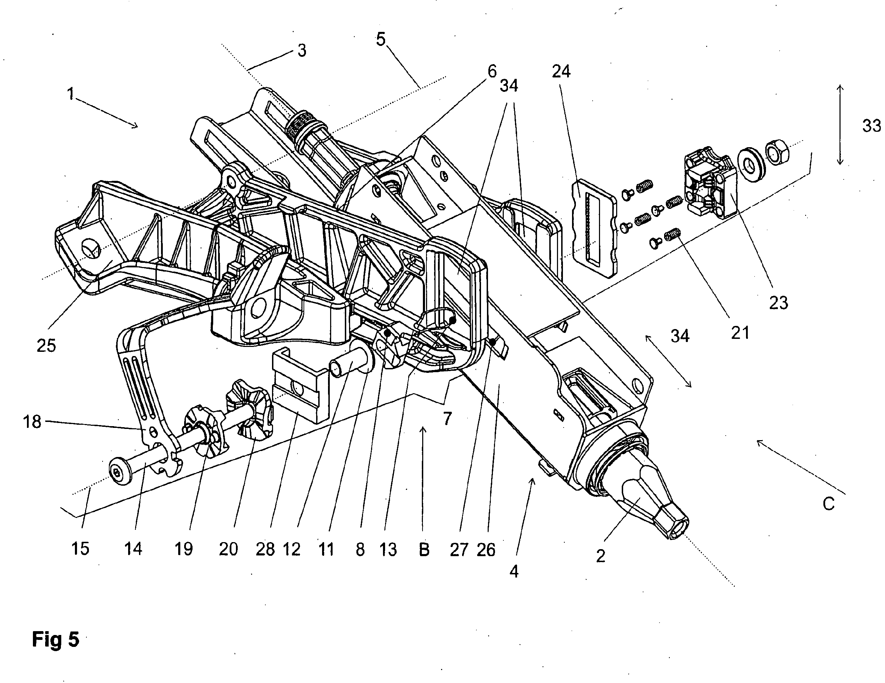

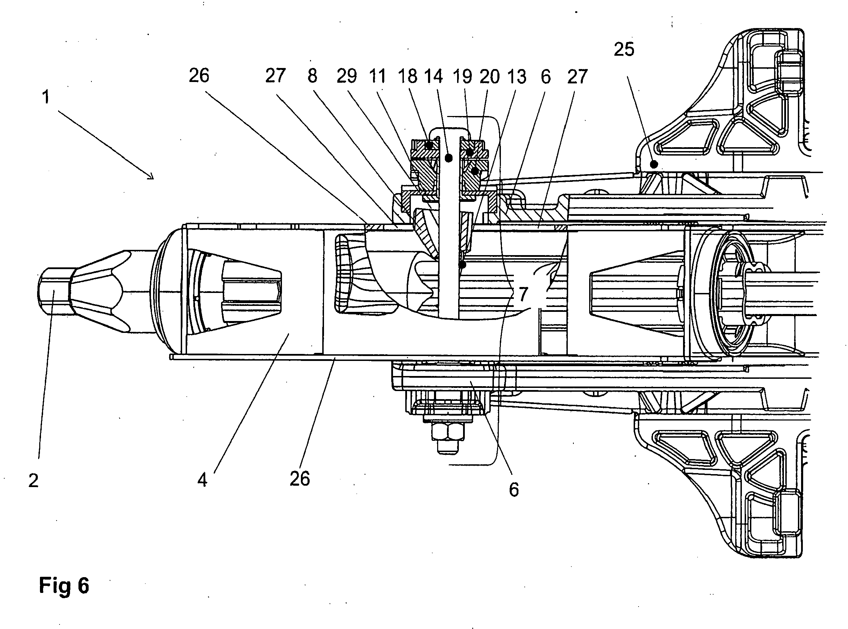

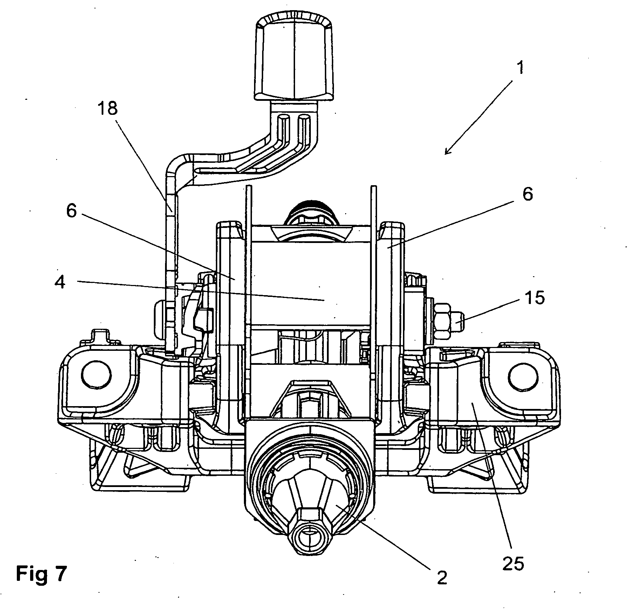

In den Figuren 5 bis 8 wird die Anwendung der beschriebenen Crash-Blockiereinrichtung auf eine verstellbare Lenksäule 1 schematisch veranschaulicht. Eine Stelleinheit 4 ist in diesem Ausführungsbeispiel in der Stellrichtung 32, die der Längenverstellung der Lenksäule entspricht, und in der Stellrichtung 33, die der Neigungs- bzw. Höhenverstellung der Lenksäule entspricht, gegenüber einer Halteeinheit 6 im geöffneten Zustand einer Fixiereinrichtung 7 verstellbar.

Die Stelleinheit 4, die im gezeigten Ausführungsbeispiel in Form eines Mantelrohrs ausgebildet ist, hält die Lenkspindel 2 und lagert diese drehbar um die Lenkspindelachse 3, wobei am fahrerseitigen Ende der Lenkspindel 2 das nicht gezeigte Steuerrad befestigt ist.

Die Halteeinheit 6 ist mit dem Chassis des Kraftfahrzeugs verbunden, und zwar im gezeigten Ausführungsbeispiel über eine Trageinheit 25, die am Chassis des Kraftfahrzeugs befestigt ist. Im Crash-Fall kann es je nach Ausführungsform vorgesehen sein, dass die Halteeinheit 6 sich gegenüber der Trageinheit 25 unter Aufzehrung von Energie verschieben kann. Lösungen hierfür sind bekannt, und nicht Bestandteil der Erfindung und werden daher auch hier nicht weiter ausgeführt.

Die Fixiereinrichtung 7 dient zur Fixierung und zur Freigabe der Verstellbarkeit der Lage der Stelleinheit 4 gegenüber der Halteeinheit 6. Im Ausführungsbeispiel ist im geöffneten Zustand der Fixiereinrichtung 7 die Stelleinheit 4 gegenüber der Halteeinheit 6 in der Axialrichtung 3 der Lenkspindel 2 längsverschiebbar (Stellrichtung 32) und um die Schwenkachse 5 verdrehbar (Stellrichtung 33). Zum Öffnen und Schließen der Fixiereinrichtung dient der Spannhebel 18. Auch ein motorisches Öffnen und Schließen der Fixiereinrichtung 7 ist denkbar und möglich.

Im geschlossenen Zustand der Fixiereinrichtung 7 ist die Stelleinheit 4 gegenüber der Halteeinheit 6 durch Fixierelemente der Fixiereinrichtung (beispielsweise Verzahnungen oder Reibflächen) derart festgesetzt, dass es bei im Normalbetrieb auf die Stelleinheit 4 einwirkenden Kräften (also ausgenommen den Crash-Fall) zu keiner Verstellung der eingestellten Position der Lenksäule kommt.

Die Fixiereinrichtung 7 ist in dieser Ausführung als Klemmsystem ausgebildet, bei dem ein Spannbolzen 14 die Halteeinheit 6 und die Steileinheit 4 durchsetzt. Im geschlossenen Zustand der Fixiereinrichtung 7 sind die Stelleinheit 4 und die Halteeinheit 6 über den Spannbolzen 14 miteinander verspannt. Vorzugsweise ist hierbei die Stelleinheit 4 wie dargestellt zwischen Seitenwangen der Halteeinheit 6 angeordnet.

Das Öffnen und Schließen der Fixiereinrichtung erfolgt durch Verdrehung einer Nockenscheibe 19 gegenüber einer Kulissenscheibe 20. Die Nockenscheibe 19 wird durch den Spannhebel 18 betätigt. Die Fixierung der Lage erfolgt im Beispiel bezüglich der Stellrichtung 33 über den Eingriff eines eine Verzahnung aufweisenden Klemmsteins 23 in die Verzahnung einer Zahnplatte 24. Durch die Nocken - Kulissenführung werden dabei die Verzahnungen unter hoher Pressspannung in Eingriff gebracht. Wird die Fixiereinrichtung geöffnet, heben sich durch die Kraft von Druckfedern 21 die Verzahnungen voneinander ab. Die Fixierung der Lage bezüglich der Stellrichtung 32 erfolgt durch das Andrücken der Seitenwangen der Halteeinheit 6 an die Stelleinheit 4 im geschlossenen Zustand der Fixiereinrichtung 7.

Alternativ zu den Verzahnungen bzw. einzelnen Reibflächen können aber auch Pakete von Lamellen, wie sie beispielsweise in der EP 0 802 104 B1 vorgeschlagen sind, oder auch andere Methoden der Lagefixierung eingesetzt sein.

Denkbar und möglich sind auch einseitig wirkende Klemmsysteme, bei denen der Klemmmechanismus insgesamt nur auf einer Seite der Lenkspindel angeordnet ist.

Der Spannbolzen 14 durchsetzt die Halteeinheit 6 und die Stelleinheit 4 durch Langlöcher 27, 34. Hierbei ist er relativ zur Stelleinheit 4 in die Stellrichtung 32 verschiebbar (und in die Stellrichtung 33 unverschiebbar) und relativ zur Halteeinheit 6 in die Stellrichtung 33 verschiebbar (und in die Stellrichtung 32 unverschiebbar). Im gezeigten Ausführungsbeispiel ist hierbei eine an einer der Seitenwangen der Halteeinheit 6 in der Stellrichtung 33 verschiebbar gelagerte Platte 28 vorhanden, die vom Spannbolzen 14 durch eine Öffnung durchsetzt wird.

In der gezeigten Lenksäule ist die Crash-Blockiereinrichtung in die Fixiereinrichtung 7 integriert, wobei das Blockierelement 8 vom Spannbolzen 14 durchsetzt wird. Das Plattenteil 26, mit dem das Blockierelement 8 zusammenwirkt, wird von einer Seitenwange der Stelleinheit 4 gebildet. Das Blockierelement 8 ist in der bereits beschriebenen Weise im Langloch 27 dieser Seitenwange angeordnet. Da der Spannbolzen 14 in die Stellrichtung 32 unverschiebbar gegenüber der Halteeinheit 6 ist und das Blockierelement 8 in die Stellrichtung 32 unverschiebbar auf dem Spannbolzen 14 angeordnet ist, ist das Blockierelement 8 in die Stellrichtung 32 unverschiebbar gehalten, auch im geöffneten Zustand der Fixiereinrichtung 7, während die Stelleinheit 4 und somit das Plattenteil 26 im geöffneteh Zustand der Fixiereinrichtung 7 in die Stellrichtung 32 verschiebbar ist. In diese Stellrichtung 32 ist das Blockierelement 8 im Ausführungsbeispiel wirksam, und zwar setzt die Wirkung des Blockierelements 8 ein, wenn vom lenkradseitigen Ende der Lenkspindel 2 her eine Kraft auf die Stelleinheit 4 ausgeübt wird, die die Haltekraft der anderen Fixierelemente der Fixiereinrichtung 7 übersteigt.

Alternativ ist es auch denkbar und möglich, dass der Spannbolzen 14 gegenüber dem Stellteil 4 in die Stellrichtung 32, in die das Blockierelement 8 wirkt, unverschiebbar ist (und das auf dem Spannbolzen 14 angeordnete Blockierelement 8 in diese Stellrichtung 32 gegenüber dem Spannbolzen 14 wiederum unverschiebbar ist) und das Plattenteil 26 von einer Seitenwange der Halteeinheit 6 gebildet wird, die ein in die Stellrichtung 32 sich erstreckendes Langloch aufweist.

Im geschlossenen Zustand der Fixiereinrichtung 7 wird das Blockierelement 8 durch eine Feder 13, die im Ausführungsbeispiel gegen den Spannbolzen 14 abgestützt ist, um einen Winkel α gegenüber dem geöffneten Zustand der Fixiereinrichtung 7 verkippt (um eine parallel zur Ebene des Plattenteils 26 und rechtwinklig zur Stellrichtung 32 liegende Achse), so dass beide Blockiernasen 9 und 10 in Anlage am Plattenteil 26 der Stelleinheit 4 gebracht sind.

Im betriebsmäßigen Zustand ist die Fixiereinrichtung 7 geschlossen und die Stelleinheit 4 gegenüber der Halteeinheit 6 fixiert. Im Falle eines Crashs des Fahrzeuges kann jedoch die Haltekraft der Fixiereinrichtung 7 gegen eine Verschiebung der Stelleinheit 4 gegenüber der Halteeinheit 6 überschritten werden, so dass es zu einer beginnenden relativen Verschiebung der beiden Einheiten kommt. Durch die Reibkraft zwischen dem Plattenteil 26 und den Blockiernasen 9, 10 kommt es zu einem auf das Blockierelement 8 wirkenden Drehmoment und wird die Verkippung des Blockierelementes verstärkt und die Blockiernasen 9, 10 üben zusätzlich zur von der Fixiereinrichtung 7 ausgeübten Haltekraft eine Haltekraft gegen eine weitere Verschiebung der beiden Einheiten 4, 6 gegeneinander aus. Dabei kann es, wie oben bereits erläutert, je nach Ausführung des Blockierelementes 8 und dessen Blockiernasen 9 und 10 zu einer zusätzlichen Haltekraft durch Reibung, Schaben oder durch Eingraben einer oder beider Blockiernasen 9, 10 in das Plattenteil 26 kommen.

In der gezeigten Ausführungsform, bei der das Blockierelement 8 von einem Spannbolzen 14 durchsetzt wird, wird durch die Auslegung der Ausnehmung des Blockierelements 8 zur Aufnahme des Spannbolzens 14 der maximal mögliche Winkel α bestimmt, um den sich das Blockierelement 8 im Crash-Fall verkippt.

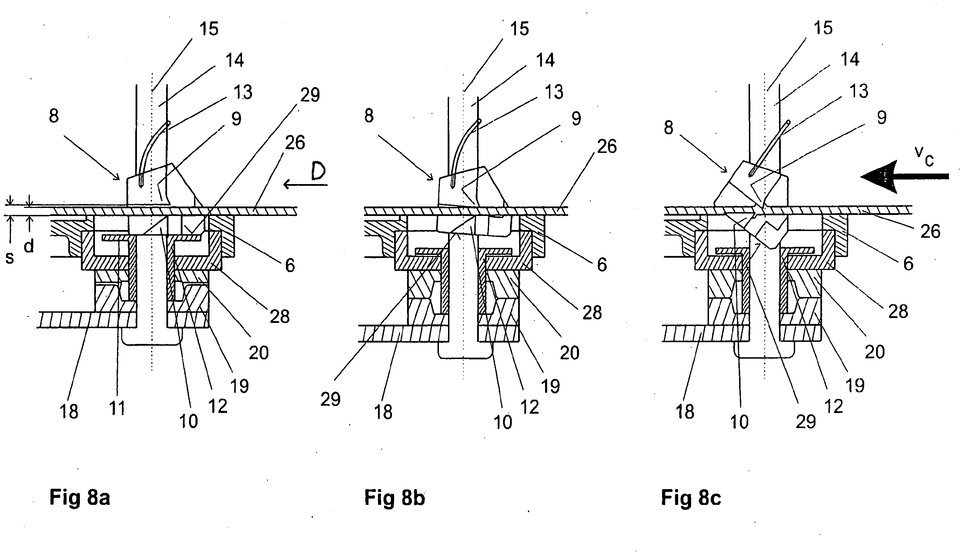

Im geöffneten Zustand der Fixiereinrichtung 7 soll eine einfache Verschiebung zwischen Stelleinheit 4 und Halteeinheit 6 ermöglicht sein. Dazu muss sichergestellt sein, dass die Blockiernasen 9, 10 sich nicht in das Plattenteil 26 eingraben. Zu diesem Zweck ist ein Planhalter 12 mit einem Plananschlag 11 vorgesehen, der durch die Nockenscheibe 19 beim Öffnen der Fixiereinrichtung 7 gegen den Flächenabschnitt 29 des Blockierelements 8 gedrückt wird. Dadurch wird dieser Flächenabschnitt 29 parallel zur Ebene des Plattenteils 26 gestellt, in dem ein weiterer Flächenabschnitt des Blockierelements 8 plan an das Plattenteil 26 angelegt wird, d.h. das Blockierelement 8 wird gegen die Federspannung der Feder 13 parallel zum Plattenteil 26 ausgerichtet, und eine der beiden Blockiernasen 9 steht nicht mehr in Kontakt zum Plattenteil 26. Eine Erhöhung der Haltekraft des Blockierelements 8, wenn das Plattenteil 26 gegenüber dem Blockierelement 8 in der Stellrichtung 32 entsprechend der Richtung v_{c} verschoben wird, wird dadurch verhindert, so dass die Verstellung der Stelleinheit 4 gegen eine nur geringe vom Blockierelement 8 aufgebrachte Reibkraft möglich ist. Insbesondere wird durch den Planhalter 12 das Blockierelement 8 am Verkanten gehindert, so dass ein Eingraben einer und/oder beider Blockiernasen 9, 10 nicht erfolgen kann. Hierzu wird auch, abhängig vom toleranzbedingten Winkelspiel des Blockierelementes 8, der Unterschied zwischen der Blechdicke d des Plattenteils 26 und des Abstandes s zwischen den beiden Blockiernasen 9, 10 ausgelegt. In der Figur 8a ist die Wirkungsweise schematisch dargestellt.

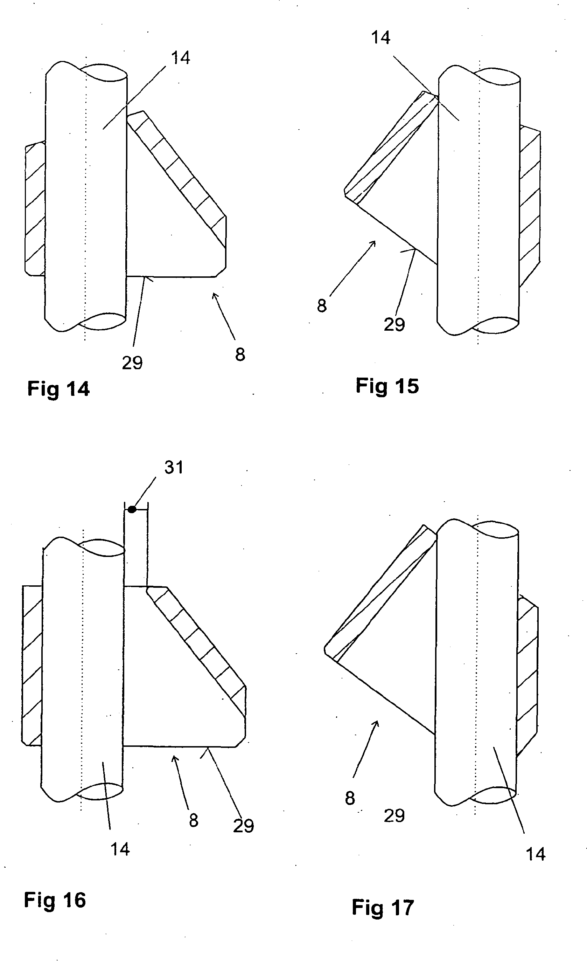

Die Figuren 14, 15 und 16, 17 veranschaulichen die Bedeutung der dem Planhalter 12 abgewandten Oberfläche am Blockierelement 8 anhand von zwei unterschiedlichen Ausführungsformen. In den Figuren 14 und 16 ist jeweils die Positionierung des Blockierelements 8 in Bezug auf den Spannbolzen 14 im geöffneten Zustand der Fixiereinrichtung 7 veranschaulicht. Die Figuren 15 und 17 zeigen entsprechend die Positionierung im geschlossenen Zustand der Fixiereinrichtung 7. Ist diese vom Planhalter 12 abgewandte Fläche einfach parallel zum Flächenabschnitt 29 ausgerichtet, wie beim Ausführungsbeispiel gemäß den Figuren 16 und 17, so entsteht im geöffneten Zustand der Fixiereinrichtung 7 ein Spiel 31 zwischen dem Spannbolzen 14 und dem Durchgangsloch im Blockierelement 8. Dieses Spiel kann zu Geräuschen und/oder durch ungünstige Führung verursachtem Verkanten des Blockierelements 8 beim Verstellen der Stelleinheit 4 gegenüber der Halteeinheit 6 führen. Durch eine Anschrägung der vom Planhalter 12 abgewandten Fläche, wie es in den Figuren 14 und 15 veranschaulicht ist, kann dieses Spiel 31 minimiert werden.

Der Vorteil der gezeigten Ausführungsform der Lenksäule 1 mit integriertem Crash-Blockiereinrichtung besteht unter anderem darin, dass die Anordnung platzsparend in die Fixiereinrichtung 7 integriert ist und nur wenig zusätzliche Bauteile benötigt. Die Herstellung der Einzelteile und die Montage ist einfach.

Weiters kann die Crash-Blockiereinrichtung mit verschiedenartigen Fixiereinrichtungen 7, wie beispielsweise Klemmsystemen mit Verzahnungen oder mit Paketen von Lamellen, kombiniert werden. Auch kann mit Vorteil die Crash-Blockiereinrichtung auf beiden Seiten des Halteteils 6 angeordnet sein.

Zur Kopplung zwischen der Fixiereinrichtung und dem mindestens einen Blockierelement 8 der Crash-Blockiereinrichtung können unterschiedliche, insbesondere mechanisch wirkende, Elemente eingesetzt werden.

Es ist zudem auch denkbar und möglich, für jede gewünschte Richtung der Verschiebung in einem möglichen Crash-Fall, entgegen der eine zusätzliche Haltekraft aufgebracht werden soll, ein mit einem Plattenteil zusammenwirkendes Blockierelement in analoger Weise vorzusehen. So kann auch nur das Aufstellen der Stelleinheit 4 der Lenksäule (also eine nach oben gerichtete Verschiebung in die Stellrichtung 33) mit einer derartigen Einrichtung gehindert oder begrenzt werden. Auch mehrere Blockierelemente, die in unterschiedlichen Stellrichtungen und/oder in der gleichen Stellrichtung (und hierbei in die gleiche oder in entgegengesetzte Richtungen) wirken, sind denkbar und möglich. Entsprechend der gewünschten Richtung der Haltekraft sind die Richtungen, in denen die Blockiernasen 9, 10 ausgerichtet sind, anzupassen.

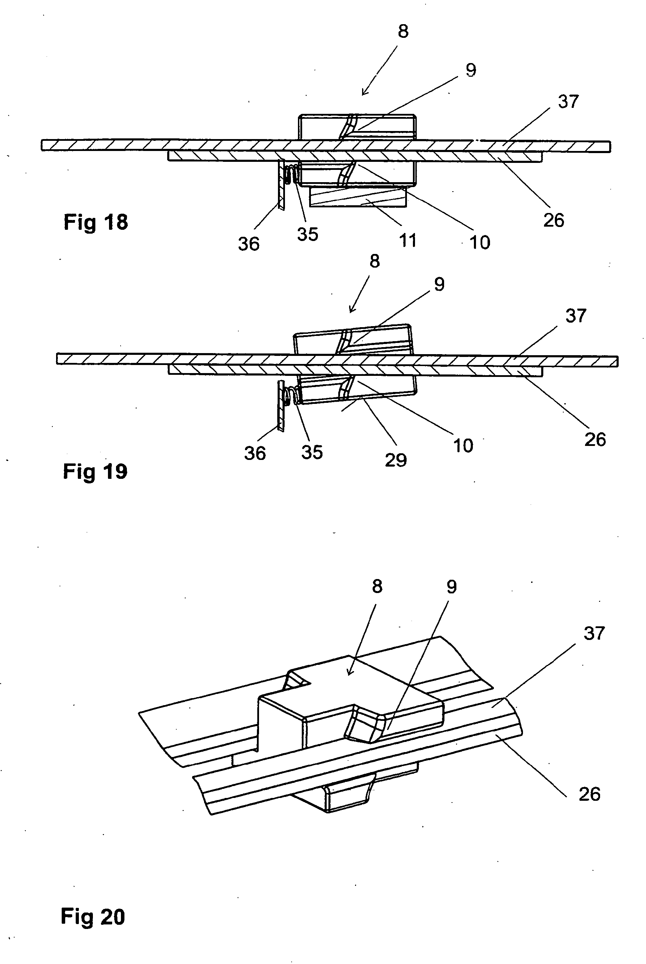

Eine weitere Ausführungsvariante der Erfindung ist schematisch in den Figuren 18 - 20 dargestellt. Diese Ausführungsvariante unterscheidet sich von den zuvor beschriebenen Ausführungsformen dadurch, dass zwischen den Blockiernasen 9, 10 des Blockierelements 8 zwei Plattenteile 26, 37 angeordnet sind, die mit ihren Hauptflächen aneinander anliegen. Im Aktivzustand der Crash-Blockiereinrichtung wird durch das Verkanten des Blockierelements 8 mit den beiden Blockiernasen 9, 10 einer Verschiebung zwischen den beiden Plattenteilen in die Stellrichtung entgegengewirkt, in die das Blockierelement 8 wirkt. Eines der beiden Plattenteile 26, 37 ist hierbei in diese Stellrichtung unverschiebbar mit der Stelleinheit verbunden, während das andere Plattenteil 26, 37 in diese Stellrichtung unverschiebbar mit der Halteeinheit verbunden ist. Die Lenksäule kann hierbei beispielsweise in ansonsten analoger Weise wie bei den zuvor beschriebenen Ausführungsbeispielen ausgebildet sein. Beispielsweise können die Plattenteile 26, 37 von Seitenwangen der Stelleinheit bzw. der Halteeinheit ausgebildet werden. Es kann hierbei nur auf einer Seite der Lenkspindel oder auf beiden Seiten der Lenkspindel ein mit Plattenteilen 26, 37 zusammenwirkendes Blockierelement 8 vorhanden sein.

Um im Passivzustand der Crash-Blockiereinrichtung zur Einstellung der Position der Lenksäule eine gegenseitige Verstellung der Plattenteile 26, 37 zu ermöglichen, wird das Blockierelement 8 im Vergleich zum Aktivzustand der Crash-Blockiereinrichtung wiederum verdreht, so dass die Verkantung der beiden Blockiernasen 9, 10 mit den Plattenteilen 26, 37 aufgehoben ist, vgl. Figur 18. Hierzu kann beispielsweise wiederum ein Plananschlag 11 vorgesehen sein, durch den das Blockierelement 8 durch ein Andrücken an eines der Plattenteile 26, 37 gegenüber den Plattenteilen 26, 37 gerade ausgerichtet wird. Dieser Plananschlag 11 kann wiederum mit der Fixiereinrichtung 7 gekoppelt sein.

Zur Ausrichtung des Blockierelements 8 in seine Stellung, die es im Aktivzustand der Crash-Blockiereinrichtung einnimmt (Figur 19), ist mindestens ein Federelement 35 vorhanden. Beispielsweise ist ein einzelnes solches Federelement 35 vorhanden, welches am einen Ende an einer Halterung 36, am anderen Ende am Blockierelement 8 befestigt ist und durch seine Elastizität nach der Freigabe des Blockierelements 8 durch Abheben des Plananschlags 11 das Blockierelement 8 in seine Aktivstellung bringt. Beispielsweise könnten auch zwei Federelemente 35 vorgesehen sein, die von gegenüberliegenden Seiten auf das Blockierelement 8 einwirken. Denkbar und möglich wäre es beispielsweise auch, dass es sich beim Federelement 35 um eine Druckfeder handelt, wobei sich das Blockierelement 8 an einem Anschlag an einem der beiden Plattenelemente 26, 37 abstützt. Dieser Anschlag kann beispielsweise durch das Ende eines Langlochs, welches das Blockierelement 8 durchsetzt, gebildet werden.

Es ist jedoch ebenso denkbar und möglich, eine Biegefeder, analog zu der in den Figuren 8a, 8b, 8c gezeigten Feder 13 zu verwenden. Die Biegefeder müsste sich in analoger Weise, wie die in den Figuren 18 und 19 gezeigte Druckfeder 35 an einem Anschlag, der in Bezug zu einem der beiden Plattenteile (26, 37) unverschiebbar angeordnet ist, abstützen.

Die Halterung 36 kann beispielsweise an einem der Plattenteile 26, 37 oder an einem hiermit starr verbundenen Teil befestigt sein.

Das Blockierelement 8 kann vom Spannbolzen durchsetzt sein oder abseits vom Spannbolzen angeordnet sein.

Die Erfindung ist auch bei Fixiereinrichtungen ohne Spannbolzen einsetzbar.

### Legende

### zu den Hinweisziffern:

- 1: Lenksäule
- 2: Lenkspindel
- 3: Lenkspindelachse
- 4: Stelleinheit
- 5: Schwenkachse
- 6: Halteeinheit
- 7: Fixiereinrichtung
- 8: Blockierelement
- 9: Blockiernase
- 10: Blockiernase
- 11: Plananschlag
- 12: Planhalter
- 13: Feder
- 14: Spannbolzen
- 15: Spannbolzenachse
- 18: Spannhebel
- 19: Nockenscheibe
- 20: Kulissenscheibe
- 21: Druckfeder
- 23: Klemmstein
- 24: Zahnplatte
- 25: Trageinheit
- 26: Plattenteil
- 27: Langloch
- 28: Platte
- 29: Flächenabschnitt
- 30: Trennebene
- 31: Spiel
- 32: Stellrichtung
- 33: Stellrichtung
- 34: Langloch
- 35: Federelement
- 36: Halterung
- 37: Plattenteil

## Patentansprüche

1. Verstellbare Lenksäule für ein Kraftfahrzeug mit einer in mindestens einer Stellrichtung (32, 33) verstellbaren Stelleinheit (4) zur Einstellung der Position der Lenksäule, einer in dieser Stellrichtung (32, 33) unverstellbaren Halteeinheit (6), einer Fixiereinrichtung (7), in deren geöffnetem Zustand die Stelleinheit (4) gegenüber der Halteeinheit (6) zur Einstellung der Position der Lenksäule verstellbar ist und in deren geschlossenem Zustand die Stelleinheit (4) von der Fixiereinrichtung (7) festgestellt ist, und einer Crash-Blockiereinrichtung, die zwischen einem Passivzustand, in welchem die Stelleinheit (4) gegenüber der Halteeinheit (6) im geöffneten Zustand der Fixiereinrichtung (7) zur Einstellung der Position der Lenksäule verstellbar ist, und einem Aktivzustand verstellbar ist, in welchem sie eine zusätzliche Haltekraft gegen eine Verstellung der Stelleinheit (4) gegenüber der Halteeinheit (6) in mindestens einer Verstellrichtung (32, 33) aufbringt, wobei die Crash-Blockiereinrichtung mindestens ein Blockierelement (8) mit zumindest zwei Blockiernasen (9, 10) umfasst, zwischen denen ein Plattenteil (26) liegt und die im Aktivzustand der Crash-Blockiereinrichtung an diesem Plattenteil (26) anliegen, wobei entweder das Blockierelement (8) in der Stellrichtung (32), in der es wirksam ist, unverschiebbar mit der Halteeinheit (6) verbunden ist und das Plattenteil (26) in diese Stellrichtung (32) unverschiebbar mit der Stelleinheit (4) verbunden ist oder das Blockierelement (8) in der Stellrichtung (32), in der es wirksam ist, unverschiebbar mit der Stelleinheit (4) verbunden ist und das Plattenteil (26) in dieser Stellrichtung (32) unverschiebbar mit der Halteeinheit (6) verbunden ist, **dadurch gekennzeichnet, dass** die Blockiernasen (9, 10) an gegenüberliegenden Seiten des Plattenteils (26) an diesem anliegen.

2. Verstellbare Lenksäule für ein Kraftfahrzeug mit einer in mindestens einer Stellrichtung (32, 33) verstellbaren Stelleinheit (4) zur Einstellung der Position der Lenksäule, einer in dieser Stellrichtung (32, 33) unverstellbaren Halteeinheit (6), einer Fixiereinrichtung (7), in deren geöffnetem Zustand die Stelleinheit (4) gegenüber der Halteeinheit (6) zur Einstellung der Position der Lenksäule verstellbar ist und in deren geschlossenem Zustand die Stelleinheit (4) von der Fixiereinrichtung (7) festgestellt ist, und einer Crash-Blockiereinrichtung, die zwischen einem Passivzustand, in welchem die Stelleinheit (4) gegenüber der Halteeinheit (6) im geöffneten Zustand der Fixiereinrichtung (7) zur Einstellung der Position der Lenksäule verstellbar ist, und einem Aktivzustand verstellbar ist, in welchem sie eine zusätzliche Haltekraft gegen eine Verstellung der Stelleinheit (4) gegenüber der Halteeinheit (6) in mindestens einer Verstellrichtung (32, 33) aufbringt, wobei die Crash-Blockiereinrichtung mindestens ein Blockierelement (8) mit zumindest zwei Blockiernasen (9, 10) umfasst, **dadurch gekennzeichnet, dass** zwischen den Blockiernasen (9, 10) zwei aneinander anliegende Plattenteile (26, 37) liegen, die im Aktivzustand der Crash-Blockiereinrichtung an den voneinander abgewandten Oberflächen dieser beiden Plattenteile (26, 37) anliegen, wo-bei eines dieser beiden Plattenteile (26, 37) in der Stellrichtung (32), in der das Blockierelement (8) wirksam ist, unverschiebbar mit der Halteeinheit (6) verbunden ist und das andere dieser beiden Plattenteile (26, 37) in dieser Stellrichtung (32) unverschiebbar mit der Stelleinheit (4) verbunden ist.

3. Verstellbare Lenksäule nach Anspruch 1 oder 2, **dadurch gekennzeichnet, dass** das Blockierelement (8) um eine Achse gegenüber dem Plattenteil (26) bzw. den Plattenteilen (26, 37) verdrehbar ist, die parallel zur Ebene des Plattenteils (26) bzw. der Plattenteilen (26, 37) und rechtwinklig zur Stellrichtung (32), in die dieses Blockierelement (8) wirksam ist, liegt.

4. Verstellbare Lenksäule nach einem der Ansprüche 1 bis 3, **dadurch gekennzeichnet, dass** im Passivzustand der Crash-Blockiereinrichtung zumindest die eine oder mehreren mit einer der beiden Oberflächen des Plattenteils (26) bzw. der Oberflächen eines der beiden Plattenteile (26, 37) zusammenwirkenden Blockiernasen (9, 10) von dieser Oberfläche abgehoben ist/sind.

5. Verstellbare Lenksäule nach Anspruch 3 oder 4, **dadurch gekennzeichnet, dass** sich das Blockierelement (8) bei einer Verstellung zwischen dem Passivzustand und dem Aktivzustand der Crash-Blockiereinrichtung um die parallel zur Ebene des Plattenteils (26) bzw. der Plattenteile (26, 37) und senkrecht zur Stellrichtung (32) liegende Achse dreht.

6. Verstellbare Lenksäule nach einem der Ansprüche 1 bis 5, **dadurch gekennzeichnet, dass** durch eine Kopplung der Crash-Blockiereinrichtung mit der Fixiereinrichtung (7) die Crash-Blockiereinrichtung beim Öffnen der Fixiereinrichtung (7) von ihrem Aktivzustand in ihren Passivzustand und beim Schließen der Fixiereinrichtung (7) von ihrem Passivzustand in ihren Aktivzustand verstellt wird.

7. Verstellbare Lenksäule nach einem der Ansprüche 1 bis 6, **dadurch gekennzeichnet, dass** die Crash-Blockiereinrichtung in die Fixiereinrichtung (7) integriert ist.

8. Verstellbare Lenksäule nach einem der Ansprüche 1 bis 7, **dadurch gekennzeichnet, dass** eine Blockiernase (9) einen zum Plattenteil (26) bzw. zum benachbarten Plattenteil (26, 37) hin gerichteten Flächenabschnitt aufweist, der im Aktivzustand der Crash-Blockiereinrichtung mit der Oberfläche dieses Plattenteils (26, 37) einen Winkel (α) bildet, der, zumindest sofern nicht der Crash-Fall eingetreten ist, größer als 0° und kleiner als 10° ist, und ein Ende dieses Flächenabschnitts der Blockiernase (9) mit der Oberfläche dieses Plattenteils (26, 37) in Kontakt steht.

9. Verstellbare Lenksäule nach Anspruch 8, **dadurch gekennzeichnet, dass** dieser Flächenabschnitt im Passivzustand der Crash-Blockiereinrichtung mit der Oberfläche dieses Plattenteils (26, 37) einen Winkel (α) von annähernd 0° bildet und von der Oberfläche dieses Plattenteils (26, 37) abgehoben ist.

10. Verstellbare Lenksäule nach einem der Ansprüche 6 bis 9, **dadurch gekennzeichnet, dass** ein Spannbolzen (14) der Fixiereinrichtung (7) einen in achsialer Richtung des Spannbolzens (14) verschiebbaren Planhalter (12) trägt, der beim Öffnen der Fixiereinrichtung (7) mit dem Blockierelement (8) in Kontakt gelangt und die mindestens eine auf einer Seite des Plattenteils (26) bzw. der Plattenteile (26, 37) liegende Blockiernase (9) vom Plattenteil (26) bzw. vom benachbarten Plattenteil (26, 37) abhebt.

11. Verstellbare Lenksäule nach einem der Ansprüche 1 bis 9, **dadurch gekennzeichnet, dass** die zusätzliche Haltekraft der Crash-Blockiereinrichtung durch Schaben zumindest einer der Blockiernasen (9, 10) an der Oberfläche des Plattenteils (26) bzw. des jeweiligen Plattenteils (26, 37) erzeugt wird.

12. Verstellbare Lenksäule nach einem der Ansprüche 1 bis 11, **dadurch gekennzeichnet, dass** die zusätzliche Haltekraft der Crash-Blockiereinrichtung durch Trennen von Werkstoff aus der Oberfläche des Plattenteils (26) bzw. des jeweiligen Plattenteils (26, 37) durch zumindest eine der Blockiernasen (9, 10) erzeugt wird.

13. Verstellbare Lenksäule nach einem der Ansprüche 1 bis 12, **dadurch gekennzeichnet, dass** die zusätzliche Haltekraft der Crash-Blockiereinrichtung durch einen Formschluss aufgebracht wird, der durch Eingraben zumindest einer der Blockiernasen (9, 10) in die Oberfläche des Plattenteils (26) bzw. des jeweiligen Plattenteils (26, 37) bewirkt wird.

14. Verstellbare Lenksäule nach einem der Ansprüche 1 bis 13, **dadurch gekennzeichnet, dass** das Blockierelement (8) mit seinen Blockiernasen (9, 10) mindestens einen parallel zur Stellrichtung (32), in die das Blockierelement (8) wirksam ist, verlaufenden Längsrand des Plattenteils (26) bzw. eines jeweiligen Plattenteils (26, 37) oder einer Ausnehmung im Plattenteil (26) bzw. im jeweiligen Plattenteil (26, 37) umgreift.

15. Verstellbare Lenksäule nach einem der Ansprüche 1 bis 14, **dadurch gekennzeichnet, dass** das Blockierelement (8) eine Ausnehmung im Plattenteil (26) bzw. im jeweiligen Plattenteil (26, 37) durchsetzt, die in Form eines parallel zur Stellrichtung (32), in die das Blockierelement (8) wirksam ist, verlaufenden Langlochs (27) ausgebildet ist, und auf zwei gegenüberliegenden Seiten jeweils mindestens eine Blockiernase (9, 10) aufweist und die Blockiernasen (9, 10) beidseitig des Plattenteils (26) bzw. der Plattenteile (26, 37) liegen.

16. Verstellbare Lenksäule nach Anspruch 1 oder einem der Ansprüche 3 bis 15, **dadurch gekennzeichnet, dass** das Blockierelement (8) auf einem Spannbolzen (14) der Fixiereinrichtung angeordnet und in der Stellrichtung (32), in der es wirksam ist, unverschiebbar mit dem Spannbolzen (14) verbunden ist und der Spannbolzen (14) in dieser Stellrichtung (32) unverschiebbar mit der Halteeinheit (6) oder der Stelleinheit (4) verbunden ist und das Plattenteil (26) unverschiebbar mit der anderen der beiden Einheiten (6, 4) verbunden ist.

17. Verstellbare Lenksäule nach einem der Ansprüche 1 bis 16, **dadurch gekennzeichnet, dass** ein in einer der Längsverstellung der Lenksäule entsprechenden Stellrichtung (32) wirksames Blockierelement (8) vorhanden ist.

18. Verstellbare Lenksäule nach einem der Ansprüche 1 bis 17, **dadurch gekennzeichnet, dass** das Plattenteil (26) bzw. eines der Plattenteile (26, 37) von einer Seitenwange der Stelleinheit (4) oder einem Teil hiervon oder einer Seitenwange der Halteeinheit (6) oder einem Teil hiervon gebildet wird.

19. Verstellbare Lenksäule nach einem der Ansprüche 1 bis 18, **dadurch gekennzeichnet, dass** mindestens eine Blockiernase (9, 10) des Blockierelements (8) ein spitzes oder schneidenförmiges Ende besitzt, mit dem es zumindest im Aktivzustand der Crash-Blockiereinrichtung am Plattenteil (26) bzw. an einem der Plattenteile (26, 37) anliegt.

20. Verstellbare Lenksäule nach einem der Ansprüche 1 bis 19, **dadurch gekennzeichnet, dass** im Aktivzustand der Crash-Blockiereinrichtung die Blockiernasen (9, 10) mit dem Plattenteil (26) bzw. den Plattenteilen (26, 37) derart in Eingriff gebracht sind, dass es bei einer beginnenden Verschiebung (v_{c}) des Plattenteils (26) bzw. zumindest eines der Plattenteile (26, 37) relativ zum Blockierelement (8) in diejenige Richtung parallel zur Stellrichtung (32), in die das Blockierelement (8) wirksam ist, zur vom Blockierelement (8) aufgebrachten, der weiteren Verschiebung entgegenwirkenden zusätzlichen Haltekraft kommt.

21. Verstellbare Lenksäule nach einem der Ansprüche 1 bis 20, **dadurch gekennzeichnet, dass** es bei einer beginnenden Verschiebung (v_{c}) des Plattenteils (26) bzw. zumindest eines der Plattenteile (26, 37) relativ zum Blockierelement (8) in diejenige Richtung parallel zur Stellrichtung (32), in die das Blockierelement (8) wirksam ist, zu einem auf das Blockierelement (8) wirkenden Drehmoment kommt, durch welches mindestens eine der Blockiernasen (9, 10) stärker an das Plattenteil (26) bzw. das jeweilige Plattenteil (26, 37) angedrückt wird.

22. Verstellbare Lenksäule nach einem der Ansprüche 1 bis 21, **dadurch gekennzeichnet, dass** eine Feder (13) vorhanden ist, die das Blockierelement (8) im geschlossenen Zustand der Fixiereinrichtung in eine dem Aktivzustand der Crash-Blockiereinrichtung entsprechende Stellung beaufschlagt.

23. Verstellbare Lenksäule nach einem der Ansprüche 1 bis 22, **dadurch gekennzeichnet, dass** das Plattenteil (26) in einer Ebene liegt bzw. die Plattenteile (26, 37) in einer Ebene liegen, die parallel zur Stellrichtung (32) ausgerichtet ist, in die das mit dem Plattenteil (26) bzw. den Plattenteilen (26, 37) zusammenwirkende Blockierelement (8) wirkt.

24. Verstellbare Lenksäule nach einem der Ansprüche 1 bis 23, **dadurch gekennzeichnet, dass** die Blockiernasen (9, 10) im Aktivzustand der Crash-Blockiereinrichtung an den Hauptflächen des Plattenteils (26) bzw. an voneinander abgewandten Hauptflächen der Plattenteile (26, 37) anliegen.

## Claims

1. An adjustable steering column for a motor vehicle, with an adjustment unit (4) which is adjustable in at least one adjustment direction (32, 33) for setting the position of the steering column, a holding unit (6) which is non-adjustable in this adjustment direction (32, 33), a fixing means (7), in the opened state of which the adjustment unit (4) is adjustable relative to the holding unit (6) for setting the position of the steering column and in the closed state of which the adjustment unit (4) is secured by the fixing means (7), and a crash-blocking means which is adjustable between a passive state, in which the adjustment unit (4) is adjustable relative to the holding unit (6) in the opened state of the fixing means (7) for setting the position of the steering column, and an active state, in which it applies an additional holding force against adjustment of the adjustment unit (4) relative to the holding unit (6) in at least one adjustment direction (32, 33), **characterised in that** the crash-blocking means comprises at least one blocking element (8) with at least two blocking projections (9, 10), between which a plate part (26) lies and which in the active state of the crash-blocking means lie on both sides against this plate part (26), with either the blocking element (8) being connected non-displaceably to the holding unit (6) in the adjustment direction (32) in which it is effective and the plate part (26) being connected non-displaceably to the adjustment unit (4) in this adjustment direction (32), or the blocking element (8) being connected non-displaceably to the adjustment unit (4) in the adjustment direction (32) in which it is effective and the plate part (26) being connected non-displaceably to the holding unit (6) in this adjustment direction (32).

2. An adjustable steering column for a motor vehicle, with an adjustment unit (4) which is adjustable in at least one adjustment direction (32, 33) for setting the position of the steering column, a holding unit (6) which is non-adjustable in this adjustment direction (32, 33), a fixing means (7), in the opened state of which the adjustment unit (4) is adjustable relative to the holding unit (6) for setting the position of the steering column and in the closed state of which the adjustment unit (4) is secured by the fixing means (7), and a crash-blocking means, which is adjustable between a passive state, in which the adjustment unit (4) is adjustable relative to the holding unit (6) in the opened state of the fixing means (7) for setting the position of the steering column, and an active state, in which it applies an additional holding force against adjustment of the adjustment unit (4) relative to the holding unit (6) in at least one adjustment direction (32, 33), **characterised in that** the crash-blocking means comprises at least one blocking element (8) with at least two blocking projections (9, 10), between which two plate parts (26, 37) which lie against one another lie and which in the active state of the crash-blocking means lie against the surfaces of these two plate parts (26, 37) which face apart from each other, with one of these two plate parts (26, 37) being connected non-displaceably to the holding unit (6) in the adjustment direction (32) in which the blocking element (8) is effective, and the other of these two plate parts (26, 37) being connected non-displaceably to the adjustment unit in this adjustment direction (32).

3. An adjustable steering column according to Claim 1 or 2, **characterised in that** the blocking element (8) can be turned about an axis relative to the plate part (26) or the plate parts (26, 37) which lies parallel to the plane of the plate part (26) or the plate parts (26, 37) and at right-angles to the adjustment direction in which this blocking element (8) is effective.

4. An adjustable steering column according to one of Claims 1 to 3, **characterised in that** in the passive state of the crash-blocking means at least the one or several blocking projection(s) (9) which cooperate(s) with one of the two surfaces of the plate part (26) or the surface of one of the plate parts (26, 3 7) is/are raised away from this surface.

5. An adjustable steering column according to Claim 3 or 4, **characterised in that** the blocking element (8) upon adjustment between the passive state and the active state of the crash-blocking means turns about the axis lying parallel to the plane of the plate part (26) or the plate parts (26, 37) and perpendicular to the adjustment direction (32).

6. An adjustable steering column according to one of Claims 1 to 5, **characterised in that** by coupling the crash-blocking means to the fixing means (7) the crash-blocking means upon the opening of the fixing means (7) is adjusted from its active state into its passive state and upon the closing of the fixing means (7) is adjusted from its passive state into its active state.

7. An adjustable steering column according to one of Claims 1 to 6, **characterised in that** the crash-blocking means is integrated in the fixing means (7).

8. An adjustable steering column according to one of Claims 1 to 7, **characterised in that** a blocking projection (9) has a surface section directed towards the plate part (26) or to the adjacent plate part (26, 37), which section in the active state of the crash-blocking means forms with the surface of this plate part (26, 37) an angle (α) which, at least as long as the crash event has not occurred, is greater than 0° and less than 10°, and one end of this surface section of the blocking projection (9) is in contact with the surface of this plate part (26, 37).

9. An adjustable steering column according to Claim 8, **characterised in that** this surface section in the passive state of the crash-blocking means forms with the surface of this plate part (26, 37) an angle (α) of approximately 0° and is raised away from the surface of this plate part (26, 37).

10. An adjustable steering column according to one of Claims 6 to 9, **characterised in that** a tightening bolt (14) of the fixing means (7) bears a flat holder (12) which is displaceable in the axial direction of the tightening bolt (14), which holder upon the opening of the fixing means (7) comes into contact with the blocking element (8) and raises the at least one blocking projection (9) lying on one side of the plate part (26) or the plate parts (26, 37) away from the plate part (26) or from the adjacent plate part (26, 37).

11. An adjustable steering column according to one of Claims 1 to 9, **characterised in that** the additional holding force of the crash-blocking means is produced by scraping at least one of the blocking projections (9, 10) on the surface of the plate part (26) or of the respective plate part (26, 37).

12. An adjustable steering column according to one of Claims 1 to 11, **characterised in that** the additional holding force of the crash-blocking means is produced by separating material from the surface of the plate part (26) or the respective plate part (26, 37) by at least one of the blocking projections (9, 10).

13. An adjustable steering column according to one of Claims 1 to 12, **characterised in that** the additional holding force of the crash-blocking means is applied by a form-lock which is brought about by engaging at least one of the blocking projections (9, 10) in the surface of the plate part (26) or the respective plate part (26, 37).

14. An adjustable steering column according to one of Claims 1 to 13, **characterised in that** the blocking element (8) with its blocking projections (9, 10) engages around at least one longitudinal edge, extending parallel to the adjustment direction (32) in which the blocking element (8) is effective, of the plate part (26) or of a respective plate part (26, 37) or a recess in the plate part (26) or in the respective plate part (26, 37).

15. An adjustable steering column according to one of Claims 1 to 14, **characterised in that** the blocking element (8) penetrates a cutout in the plate part (26) or in the respective plate part (26, 37) which is in the form of an elongate hole (27) extending parallel to the adjustment direction (32) in which the blocking element (8) is effective, and has on two opposing sides in each case at least one blocking projection (9, 10), and the blocking projections (9, 10) lie on both sides of the plate part (26) or the plate parts (26,37).

16. An adjustable steering column according to Claim 1 or one of Claims 3 to 15, **characterised in that** the blocking element (8) is arranged on a tightening bolt (14) of the fixing means and is connected non-displaceably in the adjustment direction (32) in which it is effective to the tightening bolt (14), and the tightening bolt (14) is connected non-displaceably in this adjustment direction (32) to the holding unit (6) or the adjustment unit (4), and the plate part (26) is connected non-displaceably to the other one of the two units (6, 4).

17. An adjustable steering column according to one of Claims I to 16, **characterised in that** a blocking element (8) which is effective in an adjustment direction (32) which corresponds to the longitudinal adjustment of the steering column is present.

18. An adjustable steering column according to one of Claims 1 to 17, **characterised in that** the plate part (26) or one of the plate parts (26, 37) is formed by a side wall of the adjustment unit (4) or a part thereof or a side wall of the holding unit (6) or a part thereof.

19. An adjustable steering column according to one of Claims 1 to 18, **characterised in that** at least one blocking projection (9, 10) of the blocking element (8) has a pointed or blade-shaped end with which, at least in the active state of the crash-blocking means, it lies against the plate part (26) or against one of the plate parts (26, 37).

20. An adjustable steering column according to one of Claims 1 to 19, **characterised in that** in the active state of the crash-blocking means the blocking projections (9, 10) are brought into engagement with the plate part (26) or the plate parts (26, 37) such that, upon incipient displacement (v_{c}) of the plate part (26) or at least one of the plate parts (26, 37) relative to the blocking element (8) in the direction parallel to the adjustment direction (32) in which the blocking element (8) is effective, the additional holding force which is applied by the blocking element (8) and counteracts the further displacement occurs.

21. An adjustable steering column according to one of Claims 1 to 20, **characterised in that**, upon incipient displacement (v_{c}) of the plate part (26) or at least one of the plate parts (26, 37) relative to the blocking element (8) in the direction parallel to the adjustment direction (32) in which the blocking element (8) is effective, a torque acting on the blocking element (8) occurs, by means of which at least one of the blocking projections (9, 10) is pressed more strongly against the plate part (26) or the respective plate part (26, 37).

22. An adjustable steering column according to one of Claims 1 to 21, **characterised in that** a spring (13) is present which urges the blocking element (8) in the closed state of the fixing means into a position corresponding to the active state of the crash-blocking means.

23. An adjustable steering column according to one of Claims 1 to 22, **characterised in that** the plate part (26) lies in a plane or the plate parts (26, 37) lie in a plane which is oriented parallel to the adjustment direction (32) in which the blocking element (8) which cooperates with the plate part (26) or the plate parts (26, 37) acts.

24. An adjustable steering column according to one of Claims 1 to 23, **characterised in that** the blocking projections (9, 10) in the active state of the crash-blocking means lie against the main surfaces of the plate part (26) or against main surfaces of the plate parts (26, 37) which face apart from each other.

## Revendications

1. Colonne de direction réglable pour un véhicule automobile, comportant une unité de réglage (4) déplaçable dans au moins une direction de réglage (32, 33) pour le réglage de la position de la colonne de direction, avec une unité de maintien (6) non déplaçable dans cette direction de réglage (32, 33), avec un dispositif de fixation (7), dans l'état ouvert duquel l'unité de réglage (4) est déplaçable par rapport à l'unité de maintien (6) pour le réglage de la position de la colonne de direction et dans l'état fermé duquel l'unité de réglage (4) est immobilisée par le dispositif de fixation (7), et avec un dispositif de blocage en collision, qui est déplaçable entre un état passif, dans lequel l'unité de réglage (4) est déplaçable par rapport à l'unité de fixation (6) dans l'état ouvert de l'unité de fixation (7) pour le réglage de la position de la colonne de direction, et un état actif, dans lequel il exerce une force de maintien supplémentaire contre un déplacement de l'unité de réglage (4) par rapport à l'unité de maintien (6) dans au moins une direction de déplacement (32, 33), **caractérisée en ce que** le dispositif de blocage en collision comprend au moins un élément de blocage (8) avec au moins deux ergots de blocage (9, 10), entre lesquels se trouve une partie de plaque (26) et qui, dans l'état actif du dispositif de blocage en collision, s'appliquent de part et d'autre sur cette partie de plaque (26), dans laquelle soit l'élément de blocage (8) est relié à l'unité de maintien (6) de façon non déplaçable dans la direction de réglage (32) dans laquelle il est actif et la partie de plaque (26) est reliée à l'unité de réglage (4) de façon non déplaçable dans cette direction de réglage (32), soit l'élément de blocage (8) est relié à l'unité de réglage (4) de façon non déplaçable dans la direction de réglage (32) dans laquelle il est actif et la partie de plaque (26) est reliée à l'unité de maintien (6) de façon non déplaçable dans cette direction de réglage (32).

2. Colonne de direction réglable pour un véhicule automobile, comportant une unité de réglage (4) déplaçable dans au moins une direction de réglage (32, 33) pour le réglage de la position de la colonne de direction, avec une unité de maintien (6) non déplaçable dans cette direction de réglage (32, 33), avec un dispositif de fixation (7), dans l'état ouvert duquel l'unité de réglage (4) est déplaçable par rapport à l'unité de maintien (6) pour le réglage de la position de la colonne de direction et dans l'état fermé duquel l'unité de réglage (4) est immobilisée par le dispositif de fixation (7), et avec un dispositif de blocage en collision, qui est déplaçable entre un état passif, dans lequel l'unité de réglage (4) est déplaçable par rapport à l'unité de fixation (6) dans l'état ouvert de l'unité de fixation (7) pour le réglage de la position de la colonne de direction, et un état actif, dans lequel il exerce une force de maintien supplémentaire contre un déplacement de l'unité de réglage (4) par rapport à l'unité de maintien (6) dans au moins une direction de déplacement (32, 33), **caractérisée en ce que** le dispositif de blocage en collision comprend au moins un élément de blocage (8) avec au moins deux ergots de blocage (9, 10), entre lesquels se trouvent deux parties de plaque (26, 37) appliquées l'une sur l'autre, et qui, dans l'état actif du dispositif de blocage en collision, sont appliqués sur les surfaces situées à l'opposé l'une de l'autre de ces deux parties de plaque (26, 37), dans laquelle une de ces deux parties de plaque (26, 37) est reliée à l'unité de maintien (6) de façon non déplaçable dans la direction de réglage (32) dans laquelle l'élément de blocage (8) est actif et l'autre de ces deux parties de plaque (26, 37) est reliée à l'unité de réglage de façon non déplaçable dans cette direction de réglage (32).

3. Colonne de direction réglable selon la revendication 1 ou 2, **caractérisée en ce que** l'élément de blocage (8) peut tourner par rapport à la partie de plaque (26) ou aux parties de plaque (26, 37) autour d'un axe, qui est parallèle au plan de la partie de plaque (26) ou des parties de plaque (26, 37) et perpendiculaire à la direction de réglage, dans laquelle cet élément de blocage (8) est actif.

4. Colonne de direction réglable selon l'une quelconque des revendications 1 à 3, **caractérisée en ce que**, dans l'état passif du dispositif de blocage en collision, au moins un ou plusieurs des ergots de blocage (9) coopérant avec une des deux surfaces de la partie de plaque (26) ou la surface d'une des deux parties de plaque (26, 37) est/sont soulevé(s) de celle-ci.

5. Colonne de direction réglable selon la revendication 3 ou 4, **caractérisée en ce que** l'élément de blocage (8) tourne autour de l'axe parallèle au plan de la partie de plaque (26) ou des parties de plaque (26, 37) et perpendiculaire à la direction de réglage (32), lors d'un déplacement entre l'état passif et l'état actif du dispositif de blocage en collision.

6. Colonne de direction réglable selon l'une quelconque des revendications 1 à 5, **caractérisée en ce que**, par un couplage du dispositif de blocage en collision avec le dispositif de fixation (7), le dispositif de blocage en collision est déplacé de son état actif à son état passif lors de l'ouverture du dispositif de fixation (7) et de son état passif à son état actif lors de la fermeture du dispositif de fixation (7).

7. Colonne de direction réglable selon l'une quelconque des revendications 1 à 6, **caractérisée en ce que** le dispositif de blocage en collision est intégré dans le dispositif de fixation (7).

8. Colonne de direction réglable selon l'une quelconque des revendications 1 à 7, **caractérisée en ce qu'**un ergot de blocage (9) présente une partie plate orientée vers la partie de plaque (26) ou vers la partie de plaque voisine (26, 37), qui, dans l'état actif du dispositif de blocage en collision, forme avec la surface de cette partie de plaque (26, 37) un angle (α) qui, au moins aussi longtemps qu'une collision ne s'est pas produite, est supérieur à 0° et inférieur à 10°, et une extrémité de cette partie plate de l'ergot de blocage (9) est en contact avec la surface de cette partie de plaque (26, 37).

9. Colonne de direction réglable selon la revendication 8, **caractérisée en ce que** cette partie plate forme, dans l'état passif du dispositif de blocage en collision, un angle (α) d'environ 0° avec la surface de cette partie de plaque (26, 37), et est soulevée de la surface de cette partie de plaque (26, 37).

10. Colonne de direction réglable selon l'une quelconque des revendications 6 à 9, **caractérisée en ce qu'**un boulon de serrage (14) du dispositif de fixation (7) porte un support plan (12) déplaçable en direction axiale du boulon de serrage (14), qui vient en contact avec l'élément de blocage (8) lors de l'ouverture du dispositif de fixation (7) et soulève ledit au moins un ergot de blocage (9) situé sur un côté de la partie de plaque (26) ou des parties de plaque (26, 37) de la partie de plaque (26) ou de la partie de plaque voisine (26, 37).

11. Colonne de direction réglable selon l'une quelconque des revendications 1 à 9, **caractérisée en ce que** la force de maintien supplémentaire du dispositif de blocage en collision est produite par friction d'au moins un des ergots de blocage (9, 10) sur la surface de la partie de plaque (26) ou de la partie de plaque respective (26, 37).

12. Colonne de direction réglable selon l'une quelconque des revendications 1 à 11, **caractérisée en ce que** la force de maintien supplémentaire du dispositif de blocage en collision est produite par enlèvement de matière hors de la surface de la partie de plaque (26) ou de la partie de plaque respective (26, 37) par au moins un des ergots de blocage (9, 10).

13. Colonne de direction réglable selon l'une quelconque des revendications 1 à 12, **caractérisée en ce que** la force de maintien supplémentaire du dispositif de blocage en collision est appliquée par un assemblage à complémentarité de forme, qui est réalisé par enfoncement d'au moins un des ergots de blocage (9, 10) dans la surface de la partie de plaque (26) ou de la partie de plaque respective (26, 37).

14. Colonne de direction réglable selon l'une quelconque des revendications 1 à 13, **caractérisée en ce que** l'élément de blocage (8) entoure avec ses ergots de blocage (9, 10) au moins un bord longitudinal de la partie de plaque (26) ou d'une partie de plaque respective (26, 37) qui est parallèle à la direction de réglage (32) dans laquelle l'élément de blocage (8) est actif, ou un évidement dans la partie de plaque (26) ou dans la partie de plaque respective (26, 37).

15. Colonne de direction réglable selon l'une quelconque des revendications 1 à 14, **caractérisée en ce que** l'élément de blocage (8) traverse un évidement dans la partie de plaque (26) ou dans la partie de plaque respective (26, 37), qui est réalisé sous la forme d'un trou oblong (27) s'étendant parallèlement à la direction de réglage (32) dans laquelle l'élément de blocage (8) est actif, et présente sur deux côtés opposés respectivement au moins un ergot de blocage (9, 10), et les ergots de blocage (9, 10) sont situés de part et d'autre de la partie de plaque (26) ou des parties de plaque (26, 37).

16. Colonne de direction réglable selon la revendication 1 ou l'une quelconque des revendications 3 à 15, **caractérisée en ce que** l'élément de blocage (8) est disposé sur un boulon de serrage (14) du dispositif de fixation et il est relié au boulon de serrage (14) de façon non déplaçable dans la direction de réglage (32) dans laquelle il est actif, et le boulon de serrage (14) est relié à l'unité de maintien (6) ou à l'unité de réglage (4) de façon non déplaçable dans cette direction de réglage (32) et la partie de plaque (26) est reliée de façon non déplaçable à l'autre des deux unités (6, 4).

17. Colonne de direction réglable selon l'une quelconque des revendications 1 à 16, **caractérisée en ce qu'**il est prévu un élément de blocage (8) actif dans une direction de réglage (32) correspondant au déplacement longitudinal de la colonne de direction.

18. Colonne de direction réglable selon l'une quelconque des revendications 1 à 17, **caractérisée en ce que** la partie de plaque (26) ou une des parties de plaque (26, 37) est formée par une paroi latérale de l'unité de réglage (4) ou par une partie de celle-ci ou par une paroi latérale de l'unité de maintien (6) ou par une partie de celle-ci.

19. Colonne de direction réglable selon l'une quelconque des revendications 1 à 18, **caractérisée en ce qu'**au moins un ergot de blocage (9, 10) de l'élément de blocage (8) comporte une pointe ou une extrémité tranchante, avec laquelle il s'appuie sur la partie de plaque (26) ou sur une des parties de plaque (26, 37), au moins dans l'état actif du dispositif de blocage en collision.

20. Colonne de direction réglable selon l'une quelconque des revendications 1 à 19, **caractérisée en ce que**, dans l'état actif du dispositif de blocage en collision, les ergots de blocage (9,10) sont mis en prise avec la partie de plaque (26) ou avec les parties de plaque (26, 37) de telle manière que, au début d'un déplacement (v_{c}) de la partie de plaque (26) ou d'au moins une des parties de plaque (26, 37) par rapport à l'élément de blocage (8) dans la direction parallèle à la direction de réglage (32) dans laquelle l'élément de blocage (8) est actif, il apparaisse la force de maintien supplémentaire appliquée par l'élément de blocage (8) et agissant à l'encontre du déplacement supplémentaire.

21. Colonne de direction réglable selon l'une quelconque des revendications 1 à 20, **caractérisée en ce que**, au début d'un déplacement (v_{c}) de la partie de plaque (26) ou d'au moins une des parties de plaque (26, 37) par rapport à l'élément de blocage (8) dans la direction parallèle à la direction de réglage (32) dans laquelle l'élément de blocage (8) est actif, il apparaît un couple de rotation agissant sur l'élément de blocage (8), par lequel au moins un des ergots de blocage (9, 10) est pressé plus fortement sur la partie de plaque (26) ou sur la partie de plaque respective (26, 37).

22. Colonne de direction réglable selon l'une quelconque des revendications 1 à 21, **caractérisée en ce qu'**il est prévu un ressort (13) qui, dans l'état fermé du dispositif de fixation, maintient l'élément de blocage (8) dans une position correspondant à l'état actif du dispositif de blocage en collision.

23. Colonne de direction réglable selon l'une quelconque des revendications 1 à 22, **caractérisée en ce que** la partie de plaque (26) est située dans un plan ou les parties de plaque (26, 37) sont situées dans un plan, qui est orienté parallèlement à la direction de réglage (32) dans laquelle agit l'élément de blocage (8) coopérant avec la partie de plaque (26) ou avec les parties de plaque (26, 37).

24. Colonne de direction réglable selon l'une quelconque des revendications 1 à 23, **caractérisée en ce que** les ergots de blocage (9, 10) s'appliquent, dans l'état actif du dispositif de blocage en collision, sur les faces principales de la partie de plaque (26) ou sur les faces principales situées à l'opposé l'une de l'autre des parties de plaque (26, 37).
